# EUROPEAN PATENT APPLICATION

(11) **EP 4 389 698 A1**
(43) Date of publication of application: **26.06.2024**
(21) Application number: 22858316.7
(22) Date of filing: 03.08.2022
(51) Int. Cl.: C01B 3/22, B01J 31/22, C01B 3/00, C01B 3/56, F17C 5/06

(54) **HIGH-PRESSURE HYDROGEN SUPPLY SYSTEM AND METHOD THEREOF**

(30) Priority: 17.08.2021 JP 2021132935
(71) Applicant: National Institute of Advanced Industrial Science and Technology, Chiyoda-ku Tokyo 100-8921 (JP)
(72) Inventor: KAWANAMI, Hajime, Tsukuba-shi, Ibaraki 305-8560 (JP); HIMEDA, Yuichiro, Tsukuba-shi, Ibaraki 305-8560 (JP)
(74) Representative: Gill Jennings & Every LLP
(86) International application number: PCT/JP2022/029805
(87) International publication number: WO 2023/021995

(57) **Abstract**

A purpose of the present invention is to provide a pumpless high-pressure hydrogen supply system capable of supplying high-pressure hydrogen to a fuel cell vehicle, etc., when needed without using a compressor or the like, and a method for the system. The present invention relates to a high-pressure hydrogen supply system that obtains a mixed gas of hydrogen and carbon dioxide by dehydrogenation of formic acid using a complex catalyst, separates the hydrogen therefrom, and supplies the hydrogen at a pressure of 5 MPa or more. By obtaining the mixed gas at a pressure of 5 MPa or more by dehydrogenation and cooling the mixed gas by a separator while maintaining this pressure at 0.4 MPa or more, gas components other than hydrogen are phase separated as liquids or solids and removed. The separated hydrogen is raised in purity by pressure fluctuation adsorption, continuously sent to a pressure accumulator, and stored at a pressure of 70 MPa or more.

## Description

### [Technical field]

The present invention relates to a pump-less high-pressure hydrogen supply system utilizing dehydrogenation reaction of formic acid, and a method thereof.

### [Background Art]

Hydrogen stations for supplying hydrogen serving as fuel for fuel-cell vehicles require high-pressure hydrogen of 70 MPa or more. Such high-pressure hydrogen can be provided by, for example, purification of hydrogen separated according to permeation membrane methods with hydrogen permeation membranes, or PSA methods (Pressure Swing Absorption) or TSA methods (Temperature Swing Absorption) with adsorbing materials, and then compression of such hydrogen by compression machines.

For example, Patent Document 1 discloses a method including decomposing formic acid to hydrogen and carbon dioxide with a dehydrogenation catalyst such as iridium to provide a high-pressure mixed gas of 7.3 MPa or more. Hydrogen obtained by such a method can also be compressed in a compression machine and then supplied to a fuel-cell vehicle in a hydrogen station.

### [Citation List]

### [Patent Document]

[Patent Document 1] Japanese Patent Application Publication No. 2016-124730

### [Summary of Invention]

### [Technical Problem]

In this regard, hydrogen stations require hydrogen which has a high pressure of 82 MPa or more as a fill pressure, necessary for fuel-cell vehicles, and which is purified to a high purity (99.97% or more) usable for fuel-cell vehicles or the like. High-pressure hydrogen, even if obtained, cannot be directly purified and is recompressed after being reduced in pressure to about ordinary pressure once and purified, and it is demanded to obtain high-pressure hydrogen as described above without any compression machine, in order to achieve a high system efficiency at a lower cost.

The present invention has been made in view of the above circumstances, and an object thereof is to a pump-less high-pressure hydrogen supply system that can supply high-pressure hydrogen to a fuel-cell vehicle or the like, when needed, without any compressor in purification, storage and supply of separated hydrogen at a high purity after use of a mixed gas of hydrogen and carbon dioxide obtained by dehydrogenation of formic acid and separation of the gas into hydrogen and carbon dioxide, as well as a method thereof.

### [Solution to Problem]

A high-pressure hydrogen supply system according to one embodiment of the present invention (hereinafter, also simply referred to as "high-pressure hydrogen supply system") is a high-pressure hydrogen supply system in which a mixed gas of hydrogen and carbon dioxide is obtained by dehydrogenation reaction of formic acid by use of a complex catalyst and hydrogen is separated from the mixed gas and provided at a pressure of 5 MPa or more, wherein the mixed gas is obtained at a pressure of 5 MPa or more by the dehydrogenation reaction and the mixed gas is cooled by a separator with a pressure being kept at 0.4 MPa or more, and thus a gas component other than hydrogen is removed as a liquid or a solid by phase separation and hydrogen separated is increased in purity by pressure swing adsorption and continuously sent to an accumulator and is preserved so as to be at a pressure of 70 MPa or more.

According to this characteristic, high-pressure hydrogen can be supplied to a fuel-cell vehicle or the like when needed, at a high system efficiency in a pump-less manner without any compressor or the like.

The high-pressure hydrogen supply system may be characterized by comprising a step of removing a mist component from the mixed gas after the dehydrogenation reaction. According to this characteristic, a mist including water as a medium, formic acid, and a catalyst is also generated together in generation of a high-pressure mixed gas including hydrogen and carbon dioxide in dehydrogenation reaction of formic acid, and then entrained with the mixed gas, but such a mist can be recovered by a mist trap and high system efficiency can be obtained.

The high-pressure hydrogen supply system may also be characterized in that the mixed gas from which the mist component is removed is cooled by cold energy obtained by adiabatic expansion of at least one or more selected from the group consisting of a gas, a liquid, and a solid, containing mainly carbon dioxide removed by phase separation, and then fed to the separator. According to this characteristic, the energy necessary for the entire system can be recovered and the system can be operated by a lower energy. Herein, the phrase "at least one or more selected from the group consisting of a gas, a liquid and a solid, containing mainly carbon dioxide" refers to, for example, at least one or more selected from the group consisting of a gas, a liquid and a solid, containing carbon dioxide at 50% by mass or more, 60% by mass or more, 70% by mass or more, 80% by mass or more or 90% by mass or more.

The high-pressure hydrogen supply system may also be characterized in that the mixed gas is partially returned to the reactor and bubbled. According to this characteristic, stirring can be made without placement of any stirring machine or the like, even in dehydrogenation reaction of formic acid in a high-pressure state of up to 200 MPa.

The high-pressure hydrogen supply system may also be characterized in that energy is extracted by rotation of a turbine by adiabatic expansion of the gas consisting of carbon dioxide. Furthermore, the high-pressure hydrogen supply system may also be characterized in that the reactor is heated by low-pressure hydrogen separated by the pressure swing adsorption. According to this characteristic, the energy necessary for the entire system can be recovered and the system can be operated by a lower energy.

The high-pressure hydrogen supply system may also be characterized in that the complex catalyst is an organometallic complex containing one, or two or more transition metals selected from iridium, rhodium, ruthenium, cobalt, osmium, nickel, iron, palladium, platinum and gold, or a salt of such a complex. According to this characteristic, dehydrogenation reaction of formic acid in a high-pressure state can efficiently progress.

A high-pressure hydrogen supply method according to one embodiment of the present invention (hereinafter, also simply referred to as "high-pressure hydrogen supply method") is a high-pressure hydrogen supply method in which a mixed gas of hydrogen and carbon dioxide is obtained by dehydrogenation reaction of formic acid by use of a complex catalyst and hydrogen is separated from the mixed gas to provided at a pressure of 5 MPa or more, wherein the mixed gas is obtained at a pressure of 5 MPa or more by the dehydrogenation reaction and the mixed gas is cooled by a separator with a pressure being kept at 0.4 MPa or more, and thus a gas component other than hydrogen is removed as a liquid or a solid by phase separation and hydrogen separated is increased in purity by pressure swing adsorption and continuously sent to an accumulator and is preserved so as to be at a pressure of 70 MPa or more.

According to this characteristic, high-pressure hydrogen can be supplied to a fuel-cell vehicle or the like when needed, at a high system efficiency in a pump-less manner without any compressor or the like.

The high-pressure hydrogen supply method may have the same characteristics as those of the high-pressure hydrogen supply system.

### [Brief Description of the Drawings]

[Fig. 1] FIG. 1 is a block diagram illustrating the system according to the present invention.
[Fig. 2] FIG. 2 is a block diagram illustrating one portion of the system according to the present invention.
[Fig. 3] FIG. 3 is a block diagram illustrating one portion of the system according to the present invention.
[Fig. 4] FIG. 4 illustrates general formulae of complex catalysts usable in the system according to the present invention.
[Fig. 5] FIG. 5 illustrates general formulae of complex catalysts usable in the system according to the present invention.
[Fig. 6] FIG. 6 is a block diagram illustrating systems of Examples.
[Fig. 7] FIG. 7 illustrates a general formula of a complex catalyst used in systems of Examples.
[Fig. 8] FIG. 8 is a list of running conditions in Examples.
[Fig. 9] FIG. 9 is a diagram of a condenser used in systems of Examples.
[Fig. 10] FIG. 10 is a diagram of a separator used in systems of Examples.
[Fig. 11] FIG. 11 is a list (Part 1) of catalyst ligands and catalyst rotation speeds used in systems of Examples.
[Fig. 12] FIG. 12 is a list (Part 2) of catalyst ligands and catalyst rotation speeds used in systems of Examples.
[Fig. 13] FIG. 13 is a list (Part 3) of catalyst ligands and catalyst rotation speeds used in systems of Examples.
[Fig. 14] FIG. 14 is a list (Part 4) of catalyst ligands and catalyst rotation speeds used in systems of Examples.
[Fig. 15] FIG. 15 is a list (Part 5) of catalyst ligands and catalyst rotation speeds used in systems of Examples.
[Fig. 16] FIG. 16 is a list (Part 6) of catalyst ligands and catalyst rotation speeds used in systems of Examples.
[Fig. 17] FIG. 17 is a list (Part 7) of catalyst ligands and catalyst rotation speeds used in systems of Examples.

### [Description of Embodiments]

Hereinafter, a mode for carrying out the present invention is described in detail with reference to the drawings.

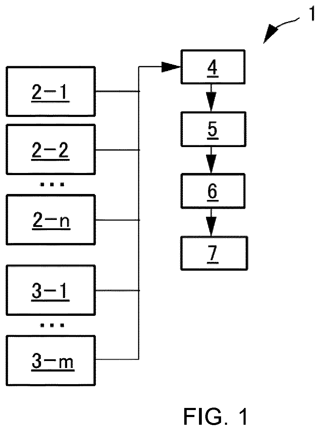

As illustrated in FIG. 1, a high-pressure hydrogen supply system 1 for supplying a hydrogen gas is an apparatus in which hydrogen is purified at a high purity, as a final product supplied from a high-pressure hydrogen supply apparatus 2 and a hydrogen supply apparatus 3, is stored in a hydrogen accumulator 4 and is, if necessary, supplied to various hydrogen utilization instruments (utilization facilities) 7 via a precooler 5, a dispenser 6, and the like. While hydrogen may be here supplied from a plurality (n) of high-pressure hydrogen supply apparatuses 2-1 to 2-n that can supply hydrogen of a high pressure of 1 MPa or more with formic acid as a hydrogen source, hydrogen may also be supplied in combination from an existing plurality (m) of hydrogen supply apparatuses 3-1 to 3-m.

High-pressure hydrogen can be suitably supplied to power generation facilities and apparatuses with fuel cells, machines, and instruments with these power generation facilities and apparatuses, vehicles such as bicycles, motorcycles, automobiles, buses, trucks, trains, aircraft, and helicopters, heavy machines such as forklifts, cranes, shovel-loaders, dump trucks, and bulldozers, drones, and gas pipes with hydrogen, as well as chemical plants, steel making plants, and the like with hydrogen. These can be each used in combination use with, as an existing hydrogen supply apparatus, a hydrogen station with liquid hydrogen, a hydrogen station with high-pressure hydrogen, a hydrogen station with MCH, or a hydrogen station from a hydrogen laboratory with ammonia.

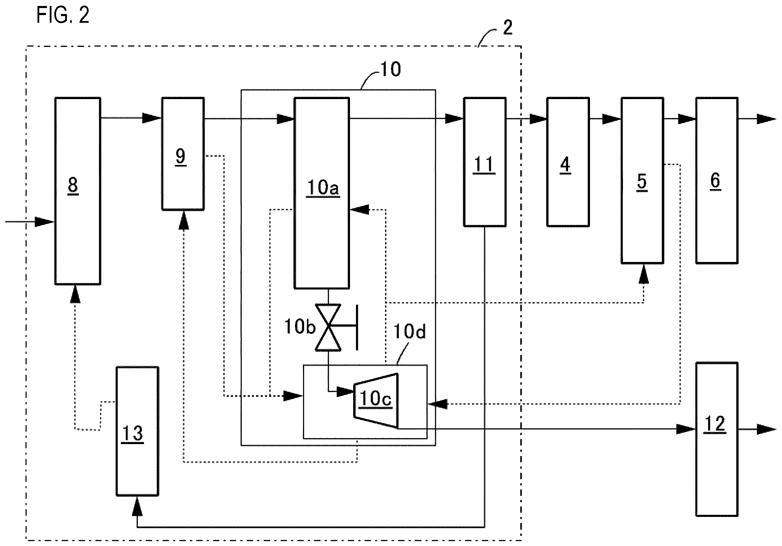

FIG. 2 illustrates the detail and peripheral apparatuses of a high-pressure hydrogen supply apparatus 2. The high-pressure hydrogen supply apparatus 2, in which formic acid serves as a hydrogen source, mainly includes a hydrogen generator 8, a condenser 9 of a generated gas or the like, a hydrogen/carbon dioxide separation section 10 of a mixed gas of hydrogen and carbon dioxide, and a hydrogen purifier 11 for purification to high-purity hydrogen. The high-pressure hydrogen supply apparatus is combined with not only a carbon dioxide storage section 12 for storage of carbon dioxide as a liquid or a solid obtained by phase separation from a gas component in the hydrogen/carbon dioxide separation section 10, but also a hydrogen accumulator 4, a precooler 5 before hydrogen supply, a dispenser 6 for supply of high-pressure hydrogen to a fuel-cell vehicle or the like in a hydrogen station, and the like. It is here preferable, as described with respect to FIG. 1, that high-pressure hydrogen be stably supplied in the hydrogen accumulator 4, the precooler 5, and the dispenser 6 from the existing hydrogen supply apparatus 3 separately connected in parallel even if the high-pressure hydrogen supply apparatus 2 with formic acid as a hydrogen source is stopped. The internal configuration and also the detail of each section of the hydrogen/carbon dioxide separation section 10 are described below.

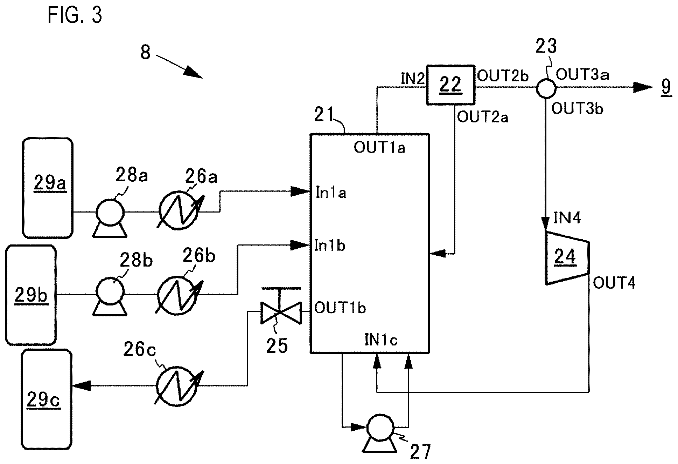

As illustrated in FIG. 3, the hydrogen generator 8 is configured from a reactor 21, a gas-liquid separator 22, a selector valve 23, a compressor 24, and the like, and a high-pressure gas serving as a source of high-pressure hydrogen is obtained by dehydrogenation reaction of formic acid in the reactor 21.

A high-pressure gas is obtained by introduction of formic acid, a catalyst, and a medium into the hydrogen generator 8 through inputs IN1a and 1b of the reactor 21, and dehydrogenation of formic acid. The high-pressure gas obtained is guided into the gas-liquid separator 22 through an input IN2 via an output OUT1a of the reactor 21, and a mist entrained with the high-pressure gas is separated. The mist is collected and separated in the form of a liquid, and returned to the reactor 21 via an output OUT2a of the gas-liquid separator 22. It is desirable for efficient returning of the liquid collected, by gravity, that the gas-liquid separator 22 be located above the reactor 21 in the gravity direction, and such returning can also be performed, if necessary, with an in-line pump or the like. On the other hand, a high-pressure gas obtained by phase separation in the gas-liquid separator 22 is guided to the condenser 9 via an output OUT3a of the selector valve 23 (see FIG. 2).

One portion of the high-pressure gas is introduced into an input IN4 of the compressor 24 via an output OUT3b from the selector valve 23, and compressed and introduced as a gas into the reactor 21 from an output OUT4 via an input IN1c. The interior of the reactor 21 is here preferably efficiently mixed in order to uniform the temperature, and the concentrations of a substrate, a catalyst, a medium, and the generated gas, and promote liberation of the generated gas. The gas introduced from the compressor 24 here preferably imparts stirring due to a force thereof applied in a period until the gas moves upwards and then exits from a surface of the liquid with the difference in specific gravity from the liquid. Thus, stirring with bubbling can be made without placement of any stirring machine or the like, even in dehydrogenation reaction of formic acid in a high-pressure state of up to 200 MPa in the reactor 21. A Weber number We (Density ρ of liquid × Amount Q² of gas blown/Surface tension σ of liquid × Inner diameter D³ of reaction container) of 10⁻⁵ or more can provide a force necessary for stirring of the liquid and can provide such stirring even without any stirring mechanism such as a stirring blade. Either a single-port nozzle or a multiport nozzle can be used in introduction of the gas into the reactor 21 as long as a required stirring force is obtained.

As illustrated in FIG. 3, a pump 27 may be provided to stir the interior of the reactor 21. Furthermore, a stirring method such as stirring with a stirring machine provided with a magnetic stirrer or a stirring blade connected to magnet coupling, or stirring (gas stirring) with air bubbles can be used, and such stirring methods can be appropriately combined to provide suitable stirring.

The reactor 21 may be a reactor according to any of batch-type, semicontinuous-type, and continuous-type methods. Furthermore, a batch-type reactor may be any of a tank-type or mixing tank-type reactor, a semicontinuous-type reactor may be any of a continuous tank-type, continuous mixing tank-type or continuous complete mixing tank-type reactor, and a continuous-type reactor may be any of a complete mixing flow-type or drifting-type reactor, and a continuous mixing tank-type reactor, a continuous complete mixing tank-type reactor, or a continuous-type tube-form reactor is preferably used. The shape of the reactor 21 can be appropriately selected depending on the stirring method, and a cylindrical reactor is most suitable in consideration of pressure resistance. For example, when a solution in a container is uniformly retained by gas stirring in a continuous mixing tank-type reactor, preferably 0.01 < D/L < 1, more suitably, 0.1 < D/L < 1 is satisfied in which the length of a cylinder is defined as L and the radius of the cylinder is defined as D. Herein, a baffle plate can also be introduced into the reactor 21 to promote mixing, or stirring and mixing by use of a stirring blade or the like can also be adopted, and the shape of the container can be appropriately optimized.

For introduction of formic acid, a catalyst, and a medium into the reactor 21, a method including sending formic acid and a catalyst dissolved in a proper medium or directly sending formic acid, a catalyst and a medium as liquids, to pumps 28a and 28b, is preferred because of being capable of continuously supplying them only as needed. A liquid having a viscosity of 1.57 cP (26°C) is needed to be stably sent even if the pressure applied to the reactor 21 is 5 MPa or more, and thus the pumps 28a and 28b are each preferably a volumetric pump, in particular, particularly preferably a reciprocating pump. Furthermore, a plunger pump or a piston pump excellent in quantitativeness can be suitably used, and such pumps can be used singly, or can be used plurally with being connected in parallel or in series. Various liquids respectively sent from a formic acid storage tank 29a and a catalyst storage tank 29b by the pumps 28a and 28b are preferably adjusted with heat exchangers 26a and 26b so as to have predetermined temperatures before introduction into the reactor 21, and then introduced.

The reactor 21 needs to have acid resistance, be able to be adjusted at a temperature of 100°C or less, and have pressure resistance so as to be resistant to a high pressure of 5 MPa or more, in a state of containing formic acid (0.001 to 26 mol/L), a catalyst, and water as a medium. The materials of the container and various pipes can be each selected from such viewpoints, and austenite-based stainless steel such as SUS316, SUS304 or SUS430, ferrite-based stainless steel, a nickel-based alloy such as INCONEL 625, INCONEL 601, HASTELLOY C276 or HASTELLOY C22, a composite material of such an alloy with titanium, or a composite material in which the inner wall of such an alloy is coated with a resin, ceramics, glass (silica) or the like can be suitably used.

The reactor 21 generates a high-pressure gas of up to 225 MPa by dehydrogenation of formic acid. Thus, the reactor 21 by itself is, of course, located in a pressure-resistant container, and preferably has a structure not including any movable portion causing failure, leakage, or the like, if possible. Herein, a movable portion may be provided as long as it does not cause any failure, leakage, or the like.

The volume of the reactor 21 can be appropriately determined depending on a required amount of hydrogen and the scale of supply facilities. The generated pressure is 5 MPa or more, and thus use of a massive reactor is disadvantageous in terms of cost and the volume is preferably up to about several hundred litters to several thousand litters (several cubic meters).

The reactor 21 needs to be externally heated in order to perform dehydrogenation because the reaction is endothermic reaction. The temperature necessary for the reaction differs depending on the catalyst and medium used, and thus can be appropriately selected. For example, the temperature is 0 to 300°C, preferably 20 to 120°C, more preferably 50 to 100°C. The reaction can be stopped by cooling, for example, in the case of the occurrence of any emergency event, the cooling temperature can be appropriately selected depending on the catalyst and medium used, and the reaction can be stopped by cooling in the range of 0°C to 80°C, more preferably 0°C to 50°C, further preferably 0°C to 20°C.

The method for heating the reactor 21 is not particularly limited as long as the reactor can be heated to a predetermined temperature. A method can be suitably used which includes heating the container by preferably a heater, a thermal medium, flame or the like and heating a reaction solution to a predetermined temperature by heat conduction. Furthermore, even any method such as heating with electromagnetic wave such as microwave or infrared light, electromagnetic induction heating or direct energization heating, or a combined method thereof can be suitably performed. In this regard, the reactor 21 includes a pressure-resistant container and is usually made of metal, and thus any method with a heater, a thermal medium, flame, electromagnetic induction heating or direct energization heating, or a combined method thereof is most suited.

A high-pressure gas is obtained by performing dehydrogenation of formic acid in the reactor 21, and thus no pressurization is needed, but a pressure necessary for gas-liquid separation at a later stage is needed to be ensured. Thus, the pressure obtained in the reaction is not particularly limited, and is preferably adjusted in the range of 0.1 MPa or more and 250 MPa or less. In particular, a mixed gas of hydrogen and carbon dioxide, obtained from dehydrogenation of formic acid, is preferably a fluid at a pressure equal to or more than the supercritical pressure, and the pressure is preferably 1 MPa or more and 225 MPa or less. The pressure is more preferably 7.3 MPa or more and 200 MPa or less, further preferably 10 MPa or more and 200 MPa or less, most suitably 20 MPa or more and 160 MPa or less. If the pressure is higher, a container higher in pressure resistance is needed and thus the pressure is practically in the range of 5 MPa or more and 100 MPa or less. Dehydrogenation of formic acid in the reactor 21 provides a mixed gas of a very high pressure as described above, and thus such a mixed gas, even if a combination with low-pressure hydrogen obtained from other hydrogen production apparatus, can have a pressure accumulated, in the form of high-pressure hydrogen of an objective pressure, for example, a pressure of 5 MPa or more.

The formic acid or/and formate serving as a raw material is only formic acid, only formate, a mixture of formic acid and formate, or a mixture of formic acid or formate and acid or base. In the case of use of formate, examples of the counter ion include each metal ion such as a lithium ion, a magnesium ion, a sodium ion, a potassium ion, a calcium ion, a barium ion, a strontium ion, an yttrium ion, a scandium ion, or a lanthanoid ion, or an ammonium ion, tetramethylammonium, or tetraethylammonium. Such counter ions may be adopted singly, or two or more kinds thereof may coexist.

The formic acid concentration has neither any upper limit, nor any lower limit, and is preferably 0.001 mol/L or more and 26 mol/L or less, further preferably 0.01 mol/L or more and 20 mol/L or less. When formic acid is used, an organic amine or any inorganic salt can also be mixed in the reaction solution, and the amount thereof relative to formic acid is preferably 0.001 molar equivalents or more and 10 molar equivalents or less, more preferably 0.01 molar equivalents or more and 5 molar equivalents or less, further preferably 0.1 molar equivalents or more and 2 molar equivalents or less.

The pH of the solution is not particularly limited because dehydrogenation of formic acid progresses even at a pH of 9 or less depending on the catalyst, and the pH is preferably 7 or less. Furthermore, the pH is preferably in the range of 0.5 to 4. Most preferably, an aqueous formic acid solution not having any need for pH adjustment is desirably used. In order to perform dehydrogenation under optimal conditions, dehydrogenation of formic acid may also be performed at a pH out of this range by adding to the solution, an acid such as sulfuric acid, hydrochloric acid, nitric acid or trifluoroacetic acid, an inorganic base such as sodium hydroxide, potassium hydroxide, lithium hydroxide, calcium hydroxide or cerium hydroxide, or an organic base such as triethylamine, diethylamine or ethylamine.

The reaction solvent may be, for example, water or an organic solvent, and only one kind thereof may be used or two or more kinds thereof may be used in combination. The type of the reaction solvent is not particularly limited as long as the complex catalyst and formic acid used in dehydrogenation reaction of formic acid can be dissolved, and a lower solubility of a gas generated, in a medium, is more preferable. In this regard, when the generated gas is a supercritical fluid, various organic substances tend to be easily dissolved in the supercritical fluid, and thus when the generated gas is soluble in water, use of water is simple and preferable. An amine compound can be, if necessary, used as one medium.

A specific reaction medium is a high-polar solvent from the viewpoint of the solubility or the like of the complex catalyst, and examples include nitriles such as acetonitrile, propionitrile, butyronitrile and benzonitrile, primary alcohols such as methanol, ethanol, n-propyl alcohol and n-butyl alcohol, secondary alcohols such as isopropyl alcohol, s-butyl alcohol and hexafluoroisopropanol, tertiary alcohols such as t-butyl alcohol, polyhydric alcohols such as ethylene glycol and propylene glycol, ethers such as tetrahydrofuran, dioxane, dimethoxyethane and diethyl ether, amides such as dimethylformamide and dimethylacetamide, sulfoxides such as dimethyl sulfoxide, esters such as ethyl acetate, and ketones such as acetone and methyl ethyl ketone.

The reaction of dehydrogenation of formic acid, performed in the reactor 21, is reaction represented by

HCOOH→H₂ + CO₂ (Formula 1)

in which hydrogen and carbon dioxide are generated from formic acid or/and formate. While carbon monoxide and water can be generated as by-products due to decarbonylation reaction of formic acid, the catalyst used allows dehydrogenation reaction of formic acid to progress at a high selection and a high efficiency, thereby enabling a hydrogen gas and a carbon dioxide gas to be efficiently produced with no carbon monoxide contained as much as possible.

Specifically, the following can be considered with respect to the catalyst.

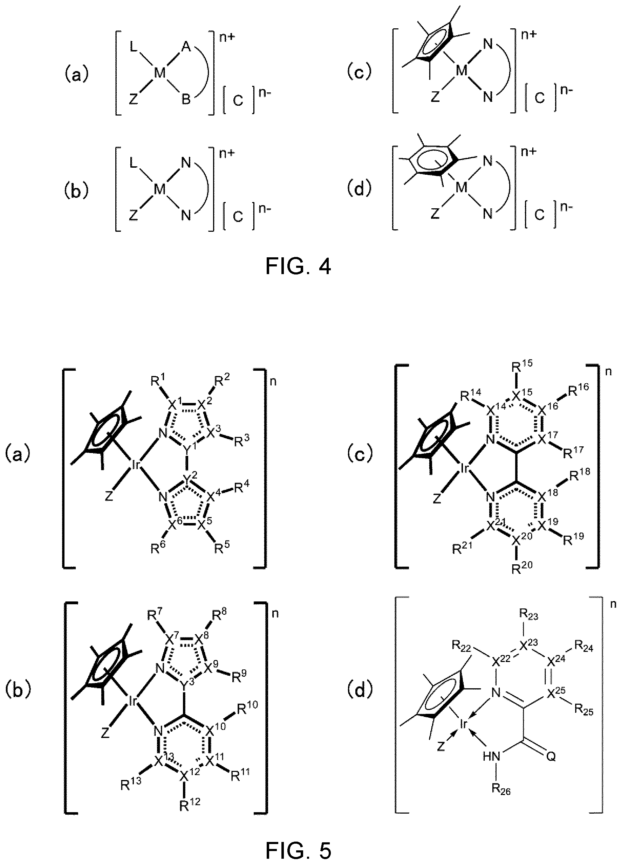

In the general formula in FIG. 4, n is a positive integer, zero, or a negative integer. M is preferably iridium, rhodium, ruthenium, cobalt, osmium, nickel, iron, palladium, platinum, or gold, particularly preferably iridium or ruthenium. A and B each independently represent a ligand having nitrogen, carbon, oxygen, sulfur, or phosphorus (see FIG. 4A), preferably a ligand having nitrogen (see FIG. 4B). Each bidentate ligand represented by 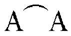 and 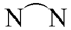 is coordinated to a metal M. The bidentate ligand containing nitrogen may be bound by any atom to have any substituent or ring structure, and the structure is not limited.

L is an aromatic anion ligand or an aromatic ligand, and when has a substituent, may be in the form of such one ligand or a plurality of such ligands. L is particularly preferably a pentamethylcyclopentadienyl ligand or a hexamethylbenzene ligand in which all are substituted with methyl groups (see FIGS. 4C and 4D).

Z is any ligand, and is a ligand of a water molecule, hydrogen (H), an alkoxide ion, a hydroxide ion, a halide ion, a carbonate ion, a trifluoromethanesulfonate ion, a sulfate ion, a nitrate ion, a formate ion, or an acetate ion. The alkoxide ion is not particularly limited and examples thereof include an alkoxide ion derived from methanol, ethanol, n-propyl alcohol, isopropyl alcohol, n-butyl alcohol, sec-butyl alcohol, isobutyl alcohol, tert-butyl alcohol, or the like. Z is preferably a water molecule particularly for the purpose of simple dissolution in water at the initiation of reaction. Z is not limited as long as dissolution in water is made once. No ligand may be contained and no Z may be present.

The type of the ligand represented by Z described above optionally allows substitution, desorption, or the like to be relatively easy. As one example, the ligand Z is a water molecule (-OH₂) or any of various negative ions. Examples include a hexafluorophosphate ion (PF₆⁻), a tetrafluoroborate ion (BF₄⁻), a hydroxide ion (OH⁻), acetate ions, carbonate ions, phosphate ions, sulfate ions, nitrate ions, halide ions [fluoride ion (F⁻), chloride ion (Cl⁻), bromide ion (Br⁻), iodide ion (I⁻), and the like], hypohalite ions [for example, hypofluorite ion, hypochlorite ion, hypobromite ion, and hypoiodite ion], halite ions [for example, fluorite ion, chlorite ion, bromite ion, and iodite ion], halogenate ions [for example, fluorate ion, chlorate ion, bromate ion, and iodate ion], perhalogenate ions [for example, perfluorate ion, perchlorate ion, perbromate ion, and periodate ion], a trifluoromethanesulfonate ion (OSO₂CF₃⁻), and a tetrakispentafluorophenylborate ion [B(C₆F₅)₄⁻]. Such a ligand is formed into hydride (H⁻) high in activity, as an intermediate, during progress of the dehydrogenation. Such a ligand is formed into an alkoxide ion when in an alcohol solvent, and may be sometimes desorbed by light or heat.

The substituent on the bidentate ligand of N-N is hydrogen, an alkyl group such as a methyl group, or any substituent. Such any substituent is, for example, an aromatic group, a hydroxy group (-OH), an ester group (-COOR), an amide group (-CONRR'), halogen (-X), an alkoxy group (-OR), an alkylthio group (-SR), an amino group (-NRR'), a carboxylic acid group (-COOH), a nitro group, or a sulfonic acid group (-SO₃H), may be located at any position of the bidentate ligand of N-N, and a plurality thereof may be located and furthermore these substituents may be the same as or different from each other.

The counter ion represented by C may be adopted singly, or two or more kinds thereof may coexist. Examples of a negative ion include a hexafluorophosphate ion (PF₆⁻), a tetrafluoroborate ion (BF₄⁻), a hydroxide ion (OH⁻), acetate ions, carbonate ions, phosphate ions, sulfate ions, nitrate ions, halide ions (for example, fluoride ion (F⁻), chloride ion (Cl⁻), bromide ion (Br⁻), and iodide ion (I⁻)), hypohalite ions (for example, hypofluorite ion, hypochlorite ion, hypobromite ion, and hypoiodite ion), halite ions (for example, fluorite ion, chlorite ion, bromite ion, and iodite ion), halogenate ions (for example, fluorate ion, chlorate ion, bromate ion, and iodate ion), perhalogenate ions (for example, perfluorate ion, perchlorate ion, perbromate ion, and periodate ion), a trifluoromethanesulfonate ion (OSO₂CF₃⁻), and a tetrakispentafluorophenylborate ion [B(C₆F₅)₄⁻].

Examples of a positive ion include various metal ions such as a lithium ion, a magnesium ion, a sodium ion, a potassium ion, a calcium ion, a barium ion, a strontium ion, an yttrium ion, a scandium ion, and a lanthanoid ion, and a hydrogen ion.

An effective component of the catalyst contains at least one or more compounds selected from the group consisting of an iridium complex, a tautomer thereof, a stereoisomer thereof, and a salt thereof, represented by FIGS. 5A to 5D. For example, such one effective component, or two or more kinds of such effective components may be used directly as the catalyst, or a mixture of such isomers may be used. Other component may be appropriately (preferably, less than 10% by weight) added and then used.

X¹ to X²¹ constituting respective heterocyclic rings in the catalysts illustrated in FIG. 5 are each independently nitrogen, carbon, oxygen or sulfur, preferably, nitrogen or carbon. Y¹ to Y²¹ are each independently nitrogen or carbon, and Q is oxygen, sulfur, or selenium. R¹ to R²⁶ are each independently a hydrogen atom, an alkyl group, a hydroxy group (-OH), an alkoxy group (-OR), a nitro group, a halogen group, a sulfone group, a carboxylic acid group, an alkylamino group, or a phenyl group, or such R(s) adjacent to each other may form a ring. R¹ to R²⁶ may be each independently present or absent. Here, when Xⁱ (i is 1 to 25) is nitrogen, oxygen, or sulfur, Rⁱ at that position is absent. The substituent is, in particular, desirably a hydroxy group (-OH) or an oxyanion group (-O⁻). The order of bond between elements forming the ligand is a single bond or a double bond, and the heterocyclic ring for constitution may be any of an aromatic ring or a non-aromatic ring. Herein, n is a positive integer, zero, or a negative integer.

The complex catalyst is preferably an organometallic complex containing one, or two or more transition metals selected from iridium, rhodium, ruthenium, cobalt, osmium, nickel, iron, palladium, platinum, and gold, or a salt of such a complex, and the complex catalyst preferably dissolves in the reaction solution uniformly, and may be in the form of a solid such as a powder uniformly dispersed in the reaction solution. Alternatively, one or more selected from other substance not reacting with any solvent at all and formic acid, and the complex catalyst may be mixed, physically adsorbed, or chemically bound. Such one or more selected from other substance not reacting with any solvent at all and formic acid are not particularly limited, and only one kind thereof may be used or two or more kinds thereof may be used in combination. Examples of such a substance not reacting with any solvent at all include silica including glass or the like, silica gel, alumina, zeolite, titania, zirconia, ceria, magnesia, calcia, yttria, niobium oxide, silica/alumina, silica/magnesia, sulfated zirconia, tungstate/zirconia, MFI titanosilicate, mesoporous silica, graphene, carbon black, graphite, carbon nanotube, activated carbon or a polymer.

The concentration of the catalyst has neither any upper limit, nor any lower limit, and can be appropriately selected depending on the reaction rate, the solubility of the complex catalyst in the reaction liquid, economic performance, and the like. An appropriate catalyst concentration is 1 × 10⁻⁹ M to 2 M, more preferably 1 × 10⁻⁷ M to 1 × 10⁻¹ M.

Stable reaction can be always performed by regularly exchanging one portion of the catalyst, from the viewpoint of preparing for degradation of the catalyst. In consideration of the amount of recovery, the cost and the like of the catalyst, 10% by volume or more and 100% by volume of the reaction solution is suitably recovered in a tank 29c, 10% or more and 70% or less of such a solution is more suitably recovered in the tank 29c, 10% or more and 40% or less of such a solution is further suitably recovered in the tank 29c, and 10% or more and 30% or less of such a solution is most suitably recovered in the tank 29c. Stable reaction can be performed by adding the corresponding catalyst and formic acid from the formic acid storage tank 29a and the catalyst storage tank 29b and thus keeping the concentration the catalyst contained in the reaction solution at a fixed value.

The molar number ratio (ratio in number of molecules) between the complex serving as the catalyst and a formic acid molecule is also not particularly limited, and the ratio of formic acid molecule: complex catalyst molecule at the initiation of reaction is, for example, 1 × 10²:1 to 1:1 × 10⁸, but not limited thereto. It is also possible to continuously produce high-pressure hydrogen and high-pressure carbon dioxide by additional addition or continuous dropping of the formic acid molecule during the reaction.

When formic acid is decomposed by dehydrogenation, the concentration of formic acid in the reactor is changed. Therefore, formic acid can be supplied at a higher concentration than the formic acid concentration in a reactor 81, thereby allowing for continuous running with a fixed concentration being kept. For example, the formic acid concentration in supply of formic acid and the catalyst from the formic acid storage tank 29a and the catalyst storage tank 29b to the reactor 21 via the pumps 28a and 28b and the heat exchangers 26a and 26b can be made so as to provide more stable running by supply of 76% or more and 100% or less of an aqueous formic acid solution, and 76% or more and 99.8% or less of an aqueous formic acid solution can be suitably used, 80% or more and 99% or less of an aqueous formic acid solution can be further suitably used, and 88% or more and 99% or less of an aqueous formic acid solution can be most suitably used.

The rate of dehydrogenation of formic acid can be controlled by adjustment of the rate of supply of formic acid and furthermore adjustment of the temperature of the reactor 21. The rate of supply of formic acid is not particularly limited, and in the case of a 200-L reactor, the rate of generation can be adjusted by supply at a rate of 0 kg or more and 1000 kg/h and the rate of generation can be adjusted by supply at a rate of suitably in the range of 0kg/h or more and 800 kg/h, further suitably in the range of 0 kg or more and 700 kg/h or less. Here, a rate of 0 kg/h corresponds to a case where the reaction is stopped. Furthermore, in the case of stopping, the reaction can be suppressed or stopped by decreasing the temperature of the reactor, and supply can be blocked. The temperature depends on the catalyst and is not particularly limited, and can be suitably adjusted in the range of 0°C or more and 100°C or less, more suitably 0°C or more and 50°C or less, further suitably 0°C or more and room temperature (25°C) or less.

Air bubbles are generated by the high-pressure gas generated in the reactor 21 and a mist component is accordingly generated, and thus the mist component is entrained with the resulting gas and introduced into the condenser 9. The mist component may interfere with stable running of the high-pressure hydrogen supply system 1. In order to remove such a mist entrained, the gas-liquid separator 22 can be inserted to collect the mist, and the resulting liquid can be returned to the reactor 21 to suitably perform the reaction. Here, the gas-liquid separator 22, when is equipped with a filter for removal of the mist entrained, such as a mist trap, or furthermore is a filter provided with a moisture removal function, can allow a dry gas to be obtained and can suitably supply the high-pressure gas.

The high-pressure gas (mixed gas of hydrogen and carbon dioxide, supercritical fluid) ejected from the reactor 21 can be stably and efficiently separated in a hydrogen/carbon dioxide separation section 10 including a hydrogen/carbon dioxide separation drum, by cooling such a fluid at a high pressure (1 MPa or more and 300 MPa or less) in advance. The method for cooling such a high-pressure fluid is not particularly limited, and may be any method as long as such a fluid can be efficiently cooled in a continuous manner. For example, a heat exchanger including a shell/tube-type heat exchanger, a plate-type heat exchanger, a fin/tube-type heat exchanger, a fin/plate-type heat exchanger or a micro heat exchanger, or a plate heat exchanger can be exemplified. The pressure, while is sometimes lowered according to liquefication of carbon dioxide due to cooling, is preferably in the range of 1 MPa or more and 300 MPa.

The temperature in the case of use of a continuous-type condenser in the condenser 9 differs depending on the pressure of the resulting high-pressure gas, and is not particularly limited as long as it is a temperature at which carbon dioxide contained in the high-pressure gas is not formed into a solid to cause clogging. For example, when the temperature is a temperature of -5 1°C or more and 10°C or less, at which carbon dioxide is formed into a solid, or is a temperature equal to or more than the solidifying point of the resulting fluid and equal to or less than the critical temperature thereof, continuous cooling can be made to introduce a high-pressure gas generated in a hydrogen/carbon dioxide separation drum 10a as described below.

The hydrogen/carbon dioxide separation section 10 includes a distillation apparatus in which the high-pressure gas cooled in the condenser 9 is more precisely separated to high-pressure hydrogen gas and high-pressure liquid or solid carbon dioxide with the pressure being kept at, for example, 0.4 MPa or more, and the gas and the liquid are separated in the state of being cooled. Such an apparatus preferably has a separation ability of a scale capable of ranging from a relatively medium-scale volume to a large-scale volume, and an apparatus can be used in which distillation used in petroleum refining is performed under a high pressure and cooling. In other words, while the simplest distillation apparatus is one in which separation is made with a single distillation at one stage, any apparatus can also provide separation, for example, a distillation apparatus in which a shelf stage is disposed and furthermore a reflux valve is disposed, or a distillation apparatus into which a filling material is introduced.

A system in which the high-pressure gas cooled in the condenser 9 is further cooled and left to still stand to separate a gas and a liquid or a solid may be used in the hydrogen/carbon dioxide separation section 10. The temperature range is not particularly limited, and when carbon dioxide is separated as a liquid, hydrogen and carbon dioxide can be suitably separated in the same temperature condition of the condenser 9, in the range of -5 1°C or more and 10°C or less. On the other hand, when carbon dioxide is separated as a solid in a batch manner, the lower limit of the cooling temperature is not particularly limited and carbon dioxide can be suitably separated as a solid at -5 1°C or less.

In the hydrogen/carbon dioxide separation section 10, liquid carbon dioxide separated in the hydrogen/carbon dioxide separation drum 10a is sent via the valve 10b to the carbon dioxide storage section 12 in which carbon dioxide is stored. The pressure of the high-pressure liquid carbon dioxide cooled is dropped to a predetermined pressure, and a turbine 10c is rotated and furthermore cold heat obtained in a cold-heat recovery section 10d due to adiabatic expansion of carbon dioxide is recovered by a refrigerant. The cold heat of the refrigerant, when sent to the condenser 9, the hydrogen/carbon dioxide separation drum 10a or the dispenser 6 (not illustrated) and used for cooling of such each apparatus, can increase the energy efficiency of the system. The electric power or the rotation energy due to rotation of the turbine 10c can be utilized for driving forces of various pumps to again increase the energy efficiency of the system.

The hydrogen purifier 11 purifies high-pressure hydrogen from the hydrogen/carbon dioxide separation section 10, to a high purity, without any significant decrease in pressure of the high-pressure hydrogen. A PSA apparatus is used therefor, and in particular a multi-stage apparatus in which PSA apparatuses are connected in series is preferred.

One portion of hydrogen (low pressure) not recovered in the hydrogen purifier 11 is preferably sent in the form of purge gas fuel to a thermal medium-heating section 13 and burned therein because such burning can allow for supply of heat necessary for dehydrogenation of formic acid in the reactor 21 of the hydrogen generator 8 and can allow for an increase in energy efficiency of the system.

Hydrogen obtained by purifying formic acid-derived hydrogen to a high purity in the hydrogen purifier 11 is guided to the hydrogen accumulator 4 and then pressurized to a predetermined pressure and then stored. The hydrogen accumulator 4 is not particularly limited, and a known apparatus can be used.

The precooler 5 is an apparatus in which the high-pressure hydrogen stored in the hydrogen accumulator 4 is cooled in advance, and contributes to safe filling under suppression of the influence of compression heat generated in filling in a tank of a fuel-cell vehicle or the like. A specific method for cooling the high-pressure hydrogen in the precooler 5 is not particularly limited, and a known apparatus can be used.

The dispenser 6 is an apparatus for filling the high-pressure hydrogen cooled in the precooler 5 in a facility using hydrogen, such as a fuel-cell vehicle, and is not particularly limited, and a known apparatus can be used.

The above system enables the resulting hydrogen and/or carbon dioxide to be used in various instruments and/or facilities via the dispenser 6 and/or the carbon dioxide storage section 12.

For example, hydrogen can be filled in a tank or the like of mobility of a car, a bus, a forklift or the like with a fuel cell, by use of the high-pressure hydrogen supply system 1 itself as a hydrogen station, or can be directly used in a fuel cell, to generate electric power. In particular, in the case of accommodation in a fuel cell, a mechanism can be used in which not only the whole or one portion of the high-pressure hydrogen supply system 1 is included, but also hydrogen is generated by dehydrogenation of formic acid according to the above method. A specific structure is not particularly limited, and application to the structure or the like of a known fuel cell can also be appropriately made.

Carbon dioxide can be utilized in a chemical reaction apparatus in which carbon dioxide is filled in a bomb or the like and then converted into any of various chemical raw materials such as formic acid, methanol, and methane, or can be utilized in a dry ice production facility with a dry ice production apparatus, or in a plant factory or the like. Not only cold energy obtained by dropping the pressure of high-pressure carbon dioxide can be used in various cooling apparatuses, but also the pressure energy in such pressure drop can allow for rotation of the turbine and extraction of electric energy. Here, hydrogen and carbon dioxide obtained in the high-pressure hydrogen supply system 1 are not limited, in terms of applications thereof, to those described above, and can be used in any technical field in which supply of high-pressure hydrogen and high-pressure carbon dioxide are needed.

### EXAMPLES

Hereinafter, specific Examples of the high-pressure hydrogen supply system and the high-pressure hydrogen supply method are described.

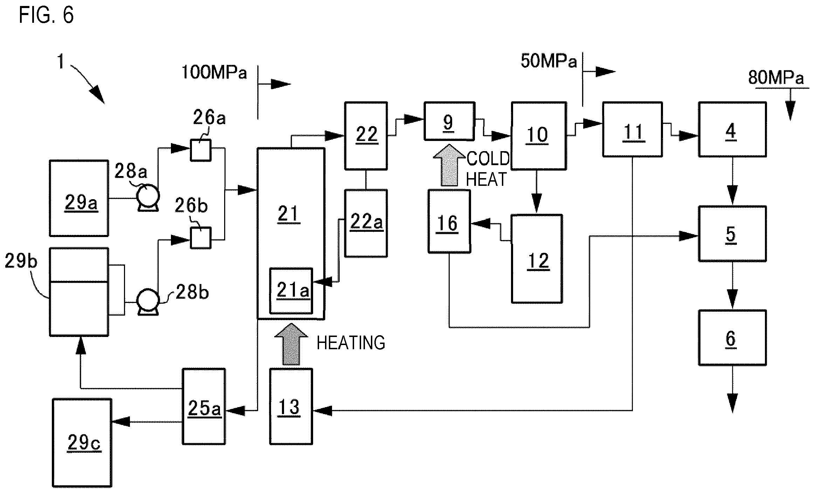

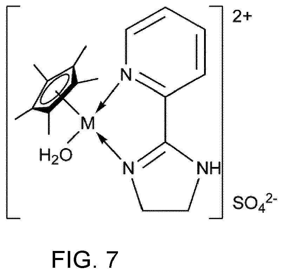

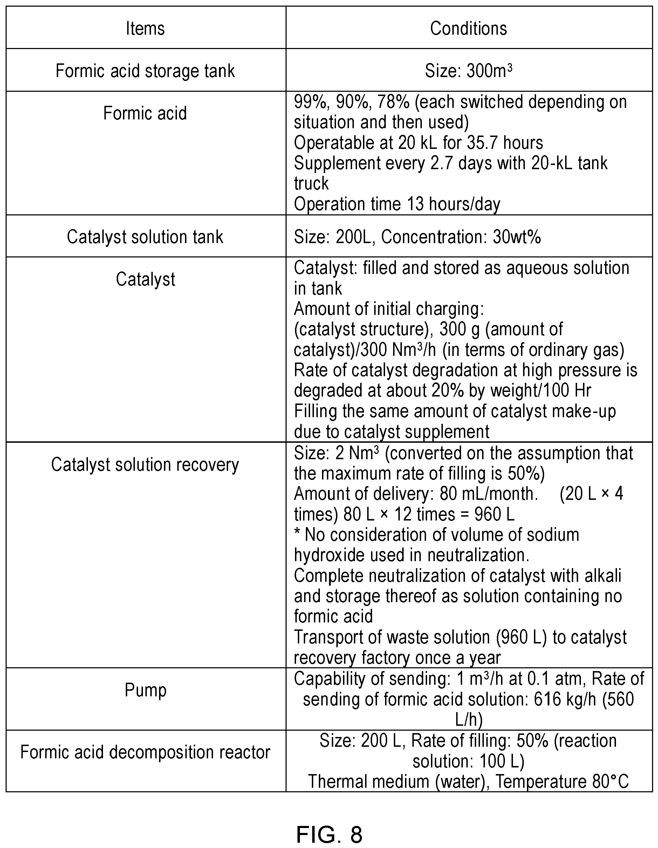

A demonstration example is described in which hydrogen and carbon dioxide are produced with the catalyst in FIG. 7 in conditions in FIG. 8 in the high-pressure hydrogen supply system 1 for production of high-pressure hydrogen from formic acid, illustrated in FIG. 6.

As illustrated in FIG. 6, running was made in which formic acid warmed to a treatment temperature in the heat exchanger 26a in midstream was introduced into the reactor 21 from the formic acid storage tank 29a via the pump 28a. The catalyst was made of an aqueous solution in which an iridium complex described below was dissolved in water, and the catalyst solution was filled in the catalyst storage tank 29b, and warmed to a predetermined temperature in the heat exchanger 26b in midstream and then introduced into the reactor 21 via the pump 28b. In the reactor 21, warming was made via a thermal medium such as water and a high-pressure gas was generated by dehydrogenation from formic acid.

The resulting high-pressure gas was separated into a mist and a gas in a mist filter of the gas-liquid separator 22, and the mist taken was directly returned to the reactor 21. In addition, 10% by volume or less of the high-pressure gas was compressed by an in-line pump 22a to a pressure higher by 0.1 MPa or more than the generated pressure, introduced into a gas stirring section 21a of the reactor 21 and bubbled, and subjected to gas stirring. The remaining high-pressure gas was cooled to a predetermined temperature by the condenser 9 via a micro heat exchanger, and furthermore separated to a gas and a liquid in the hydrogen/carbon dioxide separation section 10 with being cooled. The gas separated was purified to a hydrogen purity of 99.97% or more by the hydrogen purifier 11, and stored in the hydrogen accumulator 4 at a predetermined pressure (82 MPa) kept. It is here noted that, when high-pressure hydrogen at 70 MPa is introduced into a hydrogen fuel cell automobile, such hydrogen is cooled to about -30°C in the precooler 5 and then introduced in a predetermined amount via the dispenser 6.

In this regard, in the case of stopping of generation of a high-pressure gas, the temperatures of the reactor 21, and the heat exchangers 26a and 26b are set to 20°C or less with a refrigerant separately used, to forcedly stop reaction. In the case of routine stopping, not only stopping is made by stopping supply of formic acid and the catalyst from the formic acid storage tank 29a and the catalyst storage tank 29b and completely decomposing formic acid, but also heating of the reactor 21 by the thermal medium-heating section 13 is stopped to decrease the temperature of the reactor 21 to room temperature.

The reactor 21 was here heated to 80°C with a non-flammable medium, here, water as a thermal medium. In the heating method with the thermal medium, the reactor 21 was heated at the initial stage by warming to a predetermined temperature by an electric heater. Thereafter, an excess hydrogen gas not purified, obtained in the hydrogen purifier 11, was guided to the thermal medium-heating section 13, and such hydrogen was here burned to heat the reactor 21.

A gas stirring nozzle used in the reactor 21 was a straight pipe having an inner diameter of 10 cm relative to the size of a cylinder-type reactor (40 cm diameter × 160 cm length = about 201 L). It was confirmed that the same results were shown even in the case of stirring performed with a ceramic filter attached to the tip of the straight pipe, as a multi-hole pipe.

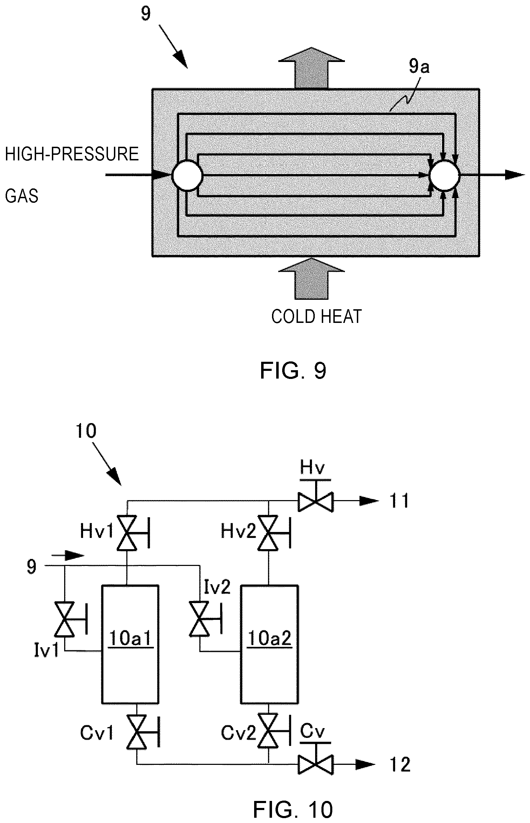

FIG. 9 schematically illustrates the structure of the condenser 9. The condenser 9 was shell/tube-type one in which seven tubes 9a each made of a SUS316 tube having an outer diameter of 1.6 mm and an inner diameter of 0.5 mm were used, and the high-pressure gas generated in the reactor 21 was subjected to heat exchange. The refrigerant used was methanol cooled to -30°C. When a high-pressure gas (carbon dioxide: hydrogen = 1:1) at 40 MPa and 30°C was input, a high-pressure fluid at 40 MPa and -30°C was obtained. Here, in the case of one tube, only cooling to at most about -15°C was obtained, and in the case of seven tubes, the same cooling result as that in the case of five tubes was obtained.

FIG. 10 schematically illustrates the structure of the hydrogen/carbon dioxide separation section 10. Hydrogen is sent to the hydrogen purifier 11 via a hydrogen side valve Hv, and carbon dioxide is sent to the carbon dioxide storage section 12 via a carbon dioxide side valve Cv. The hydrogen/carbon dioxide separation section 10 has a structure in which two hydrogen/carbon dioxide separation drums 10a1 and 10a2 are connected in parallel, and such respective drums are provided with input valves Iv1 and Iv2 and also separately provided with hydrogen side valves Hv1 and Hv2 and carbon dioxide side valves Cv1 and Cv2, thereby enabling separation steps to be individually performed under discrete conditions. When such a hydrogen/carbon dioxide separation section 10 was used, the hydrogen purity in a gaseous phase was 50% by mol at a separation pressure of 40 MPa and a separation temperature of 25°C, and the hydrogen purity in a gaseous phase was 69% by mol at 30 MPa and -15°C and the hydrogen purity was 85% by mol at 30 MPa and -51°C. Furthermore, in the case of solid-gas separation performed under conditions of 11 MPa and -78°C, the hydrogen purity was 96% by mol and the carbon dioxide purity in a solid phase was 99%. Here, the rate of recovery of hydrogen was 99% by mol and the rate of recovery of carbon dioxide was 96% by mol.

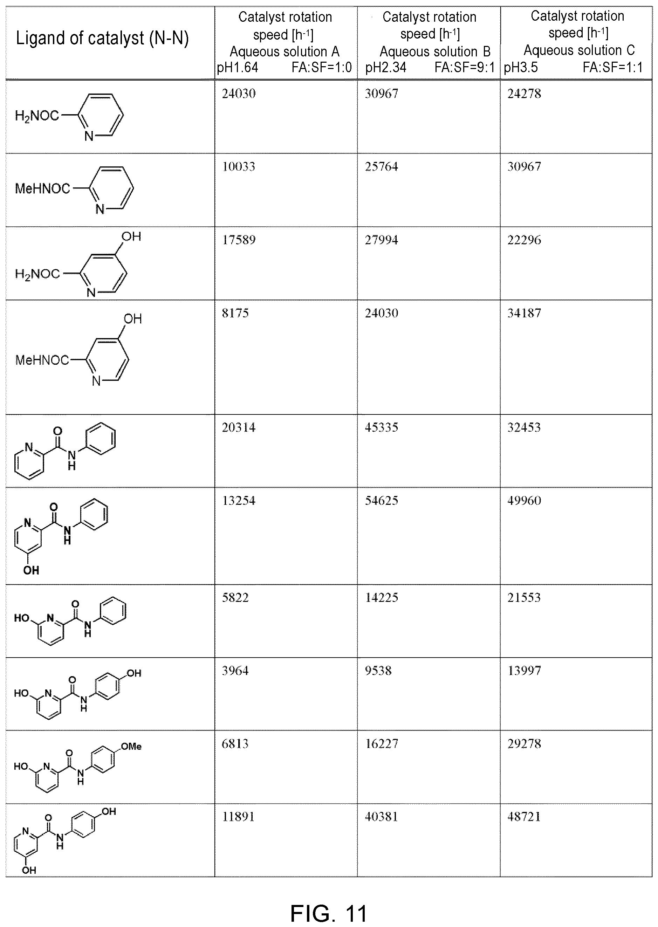

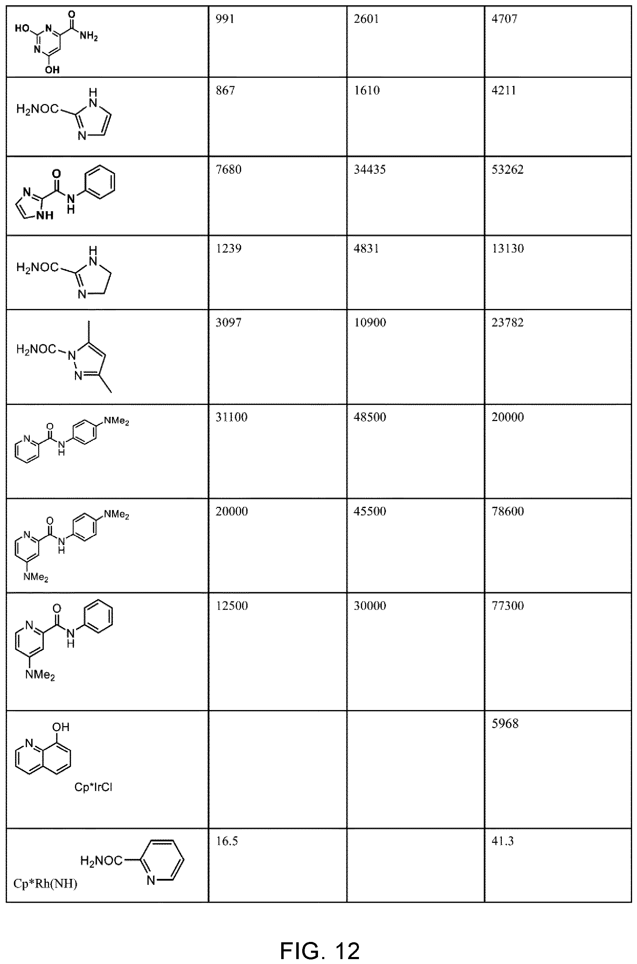

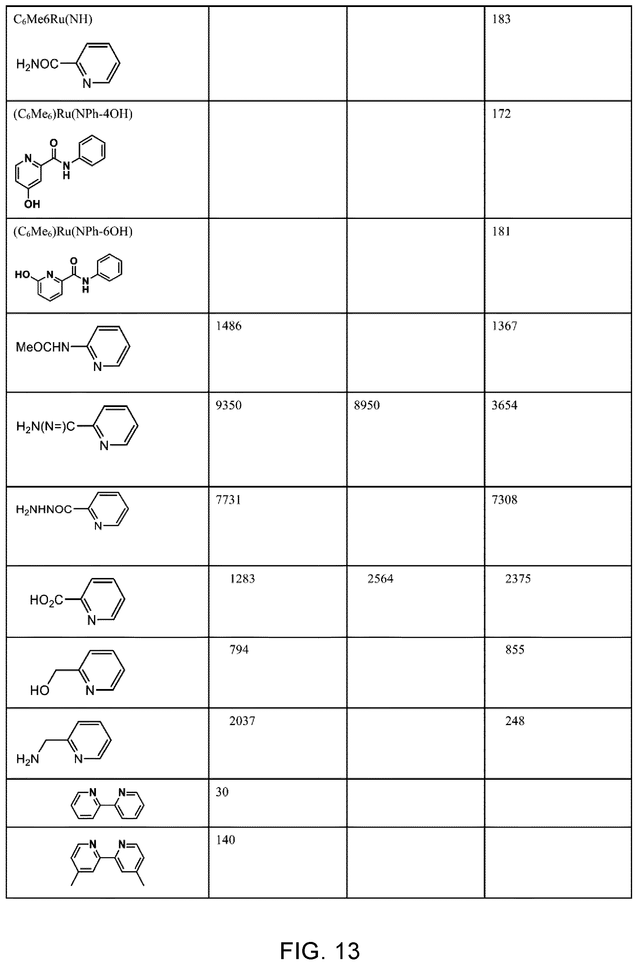

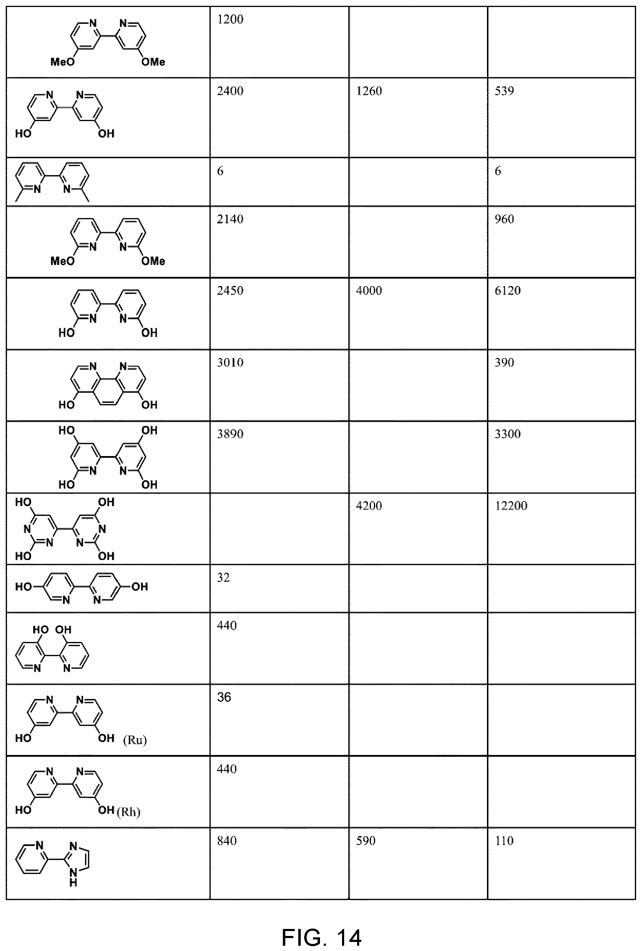

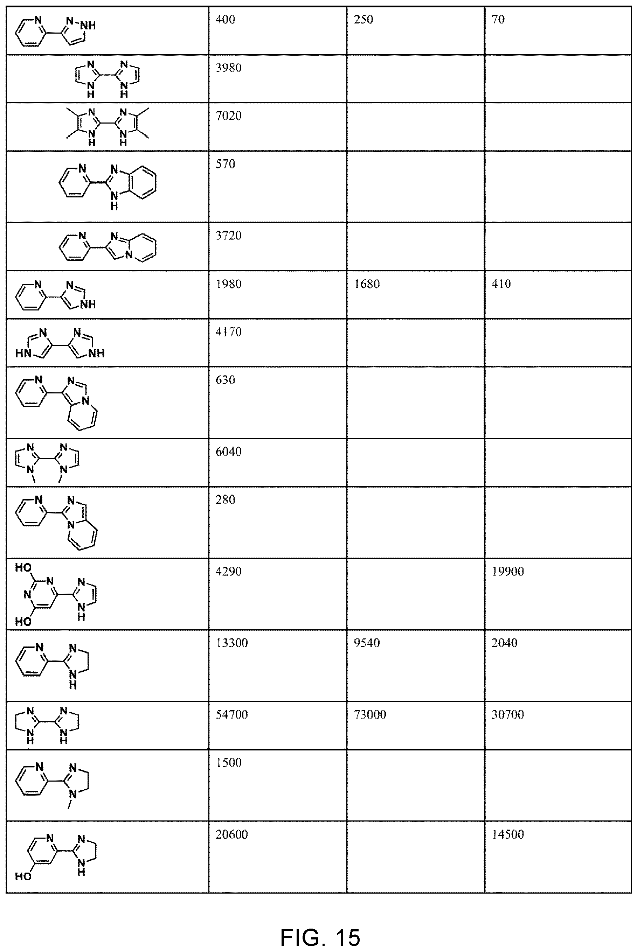

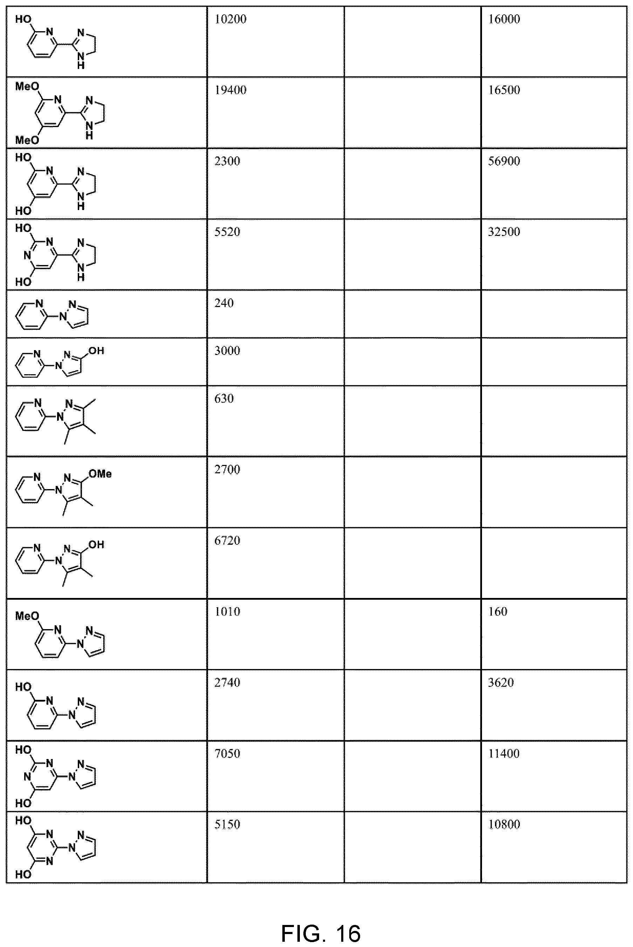

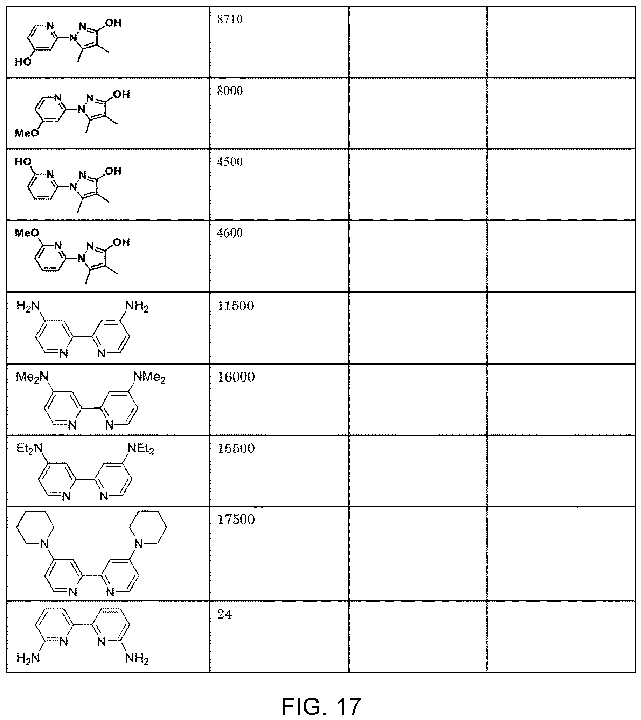

FIGS. 11 to 17 illustrated the catalyst rotation speed (TOF) [h⁻¹] in dehydrogenation in the case of use of, as the catalyst, each iridium complex (or ruthenium or rhodium catalyst in part) having a ligand different from that of the iridium complex illustrated in FIG. 7. Herein, 10 mL of each of an aqueous formic acid solution A (acidity 1.64), an aqueous formic acid-sodium formate solution B (acidity 2.34) in which formic acid and sodium formate are mixed at a molar ratio of 9:1, and an aqueous formic acid-sodium formate solution C (acidity 3.5) in which formic acid and sodium formate are mixed at a molar ratio of 1:1 was used.

The aqueous solutions A to C each had a formate ion concentration of 1 M, and the catalyst rotation speed was measured at a catalyst concentration of 0.5 µmol/L or 1 µmol/L and a reaction temperature of 60°C. It could be confirmed that all of the catalysts described in FIGS. 11 to 17 could be operated in the high-pressure hydrogen supply system. In FIG. 11, formic acid and sodium formate were respectively designated as FA (Formic Acid) and SF (Sodium Formate).

Furthermore, while the catalyst in running of the high-pressure hydrogen supply system 1 was circulated in the catalyst storage tank 29b in the catalyst recovery apparatus 25a, the high-pressure hydrogen supply system 1 was stably operated with supplement (make-up) of the catalyst on the assumption that the rate of degradation was 20%/100 hr. In other words, the catalyst concentration in the reactor 21 was always fixed by draining 20% (20 L) per 100 L of the reaction liquid every 100 hours and newly introducing the same amount as the amount drained, 20 L of a 36% by weight catalyst solution into the reactor 21 with the pump 28b under heating to 80°C by the heat exchanger 26b, during generation of a high-pressure gas in the reactor 21. While a waste solution containing the catalyst drained from the catalyst recovery apparatus 25a into the tank 29c as a catalyst solution recovery apparatus was generated in an amount of 80 L (4 times per month × 20) in the case of the operation for 13 hours per day, the solution was basified to a pH of 8 to 14 with caustic soda and then stored, about 960 L of the solution was annually recovered by a tank truck, and the catalyst contained in such an aqueous solution, and the metal and the ligand used in the catalyst were recovered and recycled. Here, the catalyst and the like that could not be recycled were rendered harmless by incineration or the like, and then treated.

Next, the hydrogen purity in use of a multi-stage pressure swing adsorption apparatus (PSA) in the hydrogen purifier 11 was determined. An experiment was performed with hydrogen having a purity of 96% by mol, obtained under the above conditions and separated at 11 MPa and -78°C. Here, the efficiency per stage of PSA was assumed to be 70% and the separation ability of hydrogen/carbon dioxide was assumed to be 100/1. As a result, the hydrogen obtained at the first stage had a purity of 99.9379% and contained 620 ppm of carbon dioxide, the hydrogen obtained at the second stage had a purity of 99.9991% and contained 8.87 ppm of carbon dioxide, and the hydrogen obtained at the third stage had a purity of 100.0000% and contained 0.125 ppm of carbon dioxide, and the hydrogen meeting the standard allowing for supply to a hydrogen automobile was obtained at the third stage. Excess hydrogen and carbon dioxide obtained by purging each had a hydrogen concentration of 4% or more in the gas, and thus these were sent to a thermal medium heater and used for warming a thermal medium of a formic acid decomposition reactor due to burning. It was here found that when hydrogen was produced through no high-pressure liquid-liquid separation from formic acid, hydrogen meeting the standard could be obtained by purification with seven to eight stages of PSA.

High-pressure hydrogen of 10 MPa, obtained by mixing the high-pressure hydrogen obtained above with hydrogen obtained in a single-type hydrogen station, was used, and was subjected to purification of hydrogen by a pressure swing adsorption apparatus (PSA), thereby finally providing 99.97% by mol high-pressure hydrogen of 10 MPa. The ratio between the hydrogen obtained in the station and the hydrogen from formic acid was appropriately determined. When a hydrogen supply system used in combination with the single-type hydrogen station was built, the thermal medium in the reactor 21 was heated with one portion of reaction heat generated in hydrogen production.

Cold heat was recovered by the refrigerant recovery apparatus 16, from liquid carbon dioxide (pressure 30 MPa, -51°C, purity 85% by weight) in the carbon dioxide storage section 12, obtained under the above conditions, and the cold heat was used to cool the condenser 9 and the hydrogen/carbon dioxide separation drum 10a, and the refrigerant of the precooler 5. A liquid phase recovered as liquefied carbon dioxide at a pressure of 30 MPa and -30°C was appropriately recovered, and obtained as a raw material for separate use of dry ice or other carbon dioxide.

Furthermore, power recovery can be provided by generation of electricity due to power recovery or by charge in a storage battery, during expansion of the liquid carbon dioxide and production of dry ice. For example, a system workable even at the time of stopping of grid power in times of disaster can be made by generation of electricity due to power recovery or by charge in a storage battery, with the pressure in the expansion, or the electric power in a storage battery can be utilized in the electric power required in a station and a charge mode can be provided when charge capacity is decreased. In the case of combination use with other hydrogen station, use of one portion as the cold heat during cooling can also be made.

While Examples of the present invention and Variation Examples based on such Examples are described above, the present invention is not necessarily limited to these Examples. Various alternative Examples and modified Examples can be found out by those skilled in the art without departing from the gist of the present invention or the accompanied claims.

### [REFERENCE SIGNS LIST]

- 1: system
- 2: high-pressure hydrogen supply apparatus
- 3: hydrogen supply apparatus
- 4: hydrogen accumulator
- 5: precooler
- 6: dispenser
- 7: hydrogen utilization instrument (utilization facility)
- 8: hydrogen generator
- 9: condenser
- 10: hydrogen/carbon dioxide separation section
- 10a: hydrogen/carbon dioxide separation drum
- 11: hydrogen purifier
- 12: carbon dioxide storage section
- 21: reactor
- 22: gas-liquid separator
- 23: selector valve
- 24: compressor

## Claims

1. A high-pressure hydrogen supply system in which a mixed gas of hydrogen and carbon dioxide is obtained by dehydrogenation reaction of formic acid by use of a complex catalyst and hydrogen is separated from the mixed gas and provided at a pressure of 5 MPa or more, wherein
the mixed gas is obtained at a pressure of 5 MPa or more by the dehydrogenation reaction in the reactor and the mixed gas is cooled by a separator with a pressure being kept at 0.4 MPa or more, and thus a gas component other than hydrogen is removed as a liquid or a solid by phase separation and hydrogen separated is increased in purity by pressure swing adsorption and continuously sent to an accumulator and is preserved so as to be at a pressure of 70 MPa or more.

2. The high-pressure hydrogen supply system according to claim 1, comprising a step of removing a mist component from the mixed gas after the dehydrogenation reaction.

3. The high-pressure hydrogen supply system according to claim 2, wherein the mixed gas from which the mist component is removed is cooled by cold energy obtained by adiabatic expansion of at least one or more selected from the group consisting of a gas, a liquid, and a solid, containing mainly carbon dioxide removed by phase separation, and then fed to the separator.

4. The high-pressure hydrogen supply system according to claim 3, wherein the mixed gas is partially returned to the reactor and bubbled.

5. The high-pressure hydrogen supply system according to claim 4, wherein energy is extracted by rotation of a turbine by adiabatic expansion of the gas consisting of carbon dioxide.

6. The high-pressure hydrogen supply system according to claim 4, wherein, when a purity of hydrogen separated is increased by pressure swing adsorption, energy is extracted by rotation of a turbine with adiabatic expansion of the gas consisting of carbon dioxide removed.

7. The high-pressure hydrogen supply system according to any one of claims 1 to 6, wherein the reactor is heated by low-pressure hydrogen separated by the pressure swing adsorption.

8. The high-pressure hydrogen supply system according to any one of claims 1 to 7, wherein the complex catalyst is an organometallic complex comprising one, or two or more transition metals selected from iridium, rhodium, ruthenium, cobalt, osmium, nickel, iron, palladium, platinum and gold, or a salt of such a complex.

9. A high-pressure hydrogen supply method in which a mixed gas of hydrogen and carbon dioxide is obtained by dehydrogenation reaction of formic acid by use of a complex catalyst and hydrogen is separated from the mixed gas and provided at a pressure of 5 MPa or more, wherein
the mixed gas is obtained at a pressure of 5 MPa or more by the dehydrogenation reaction in the reactor and the mixed gas is cooled by a separator with a pressure being kept at 0.4 MPa or more, and thus a gas component other than hydrogen is removed as a liquid or a solid by phase separation and hydrogen separated is increased in purity by pressure swing adsorption and continuously sent to an accumulator and is preserved so as to be at a pressure of 70 MPa or more.

10. The high-pressure hydrogen supply method according to claim 9, comprising a step of removing a mist component from the mixed gas after the dehydrogenation reaction.

11. The high-pressure hydrogen supply method according to claim 10, wherein the mixed gas from which the mist component is removed is cooled by cold energy obtained by adiabatic expansion of at least one or more selected from the group consisting of a gas, a liquid, and a solid, containing mainly carbon dioxide removed by phase separation, and then fed to the separator.

12. The high-pressure hydrogen supply method according to claim 11, wherein the mixed gas is partially returned to the reactor and bubbled.

13. The high-pressure hydrogen supply method according to any one of claims 9 to 12, wherein the complex catalyst is an organometallic complex comprising one, or two or more transition metals selected from iridium, rhodium, ruthenium, cobalt, osmium, nickel, iron, palladium, platinum, and gold, or a salt of such a complex.
